# EUROPEAN PATENT APPLICATION

(11) **EP 4 560 904 A1**
(43) Date of publication of application: **28.05.2025**
(21) Application number: 24205529.1
(22) Date of filing: 09.10.2024
(51) Int. Cl.: H02M 1/00, H02M 1/32, H02M 3/335

(54) **FULL-BRIDGE POWER CONVERTER**

(30) Priority: 21.11.2023 TW 112144982
(71) Applicant: APh ePower Co., Ltd., Kaohsiung City 821 (TW)
(72) Inventor: WANG, Jian-Min, 821 Kaohsiung City (TW); HU, Wei-En, 821 Kaohsiung City (TW); YI, Kai-Lun, 821 Kaohsiung City (TW); SU, Hsiu-Hsien, 821 Kaohsiung City (TW); HUANG, Shang-Zeng, 821 Kaohsiung City (TW)
(74) Representative: Becker, Eberhard

(57) **Abstract**

A full-bridge power converter (100) is provided. The full-bridge power converter (100) includes a transformer circuit (110), an input-side circuit (120), an output-side circuit (130), and a controller (140). The input-side circuit (120) includes an input-side full-bridge circuit (121) and an input inductor (LIN). The input-side full-bridge circuit (121) includes power switches (SW1 to SW4). The output-side circuit (130) includes an output-side full-bridge circuit (131) and an output capacitor (CO). The controller (140) turns on the power switches (SW1 to SW4) during a first period, causing the transformer circuit (110) to release an electric energy stored in the transformer circuit (110). The controller (140) turns on the power switches (SW1 to SW4) during a second period after the first period, and controls the output-side full-bridge circuit (131) to precharge the output-side full-bridge circuit (131) by using an energy stored in the output capacitor (CO).

## Description

### BACKGROUND

### Technical Field

The disclosure relates to a power converter, and in particular to a full-bridge power converter.

### Description of Related Art

Generally speaking, a full-bridge power converter includes an input-side circuit, a transformer, and an output-side circuit. The input-side circuit is coupled to the primary side of the transformer. The input-side circuit includes multiple power switches. It should be noted that during operation of the input-side circuit, the electrical energy stored in the primary side of the transformer provides a voltage stress to the power switch. The life of the power switch is shortened by the voltage stress.

It can be seen from this that how to reduce the voltage stress from the transformer is one of the research focuses of those skilled in the art.

### SUMMARY

The disclosure provides a full-bridge power converter that can reduce a voltage stress from a transformer.

The full-bridge power converter of the disclosure includes a transformer circuit, an input-side circuit, an output-side circuit, and a controller. The input-side circuit is coupled to a primary circuit of the transformer circuit. The input-side circuit includes an input-side full-bridge circuit and an input inductor. The input-side full-bridge circuit includes a first power switch, a second power switch, a third power switch, and a fourth power switch. The input inductor is coupled between a positive power terminal of a battery module and the input-side full-bridge circuit. The output-side circuit includes an output-side full-bridge circuit and an output capacitor. The output-side full-bridge circuit is coupled to a first end of a load, a second end of the load and a secondary circuit of the transformer circuit. The output capacitor is coupled between the first terminal of the load and the second terminal of the load. The controller turns on the first power switch, the second power switch, the third power switch, and the fourth power switch during the first period, causing the transformer circuit to release an electric energy stored in the transformer circuit. The controller is coupled to the input-side circuit and the output-side circuit. The controller turns on the first power switch, the second power switch, the third power switch, and the fourth power switch in the second period after the first period, and controls the output-side full-bridge circuit to precharge the output-side full-bridge circuit by using an energy stored in the output capacitor. A switching time point from the first period to the second period is determined by the load.

Based on the above, during the first period, the controller turns on the first power switch, the second power switch, the third power switch, and the fourth power switch to release the electric energy stored in the transformer circuit. In this way, the full-bridge power converter can reduce the voltage stress from the transformer circuit.

### BRIEF DESCRIPTION OF THE DRAWINGS

FIG. 1 is a schematic diagram of a full-bridge power converter according to an embodiment of the disclosure.
FIG. 2 is a signal timing diagram according to an embodiment of the disclosure.
FIG. 3A is a schematic diagram of the operation of the full-bridge power converter during the first period according to an embodiment of the disclosure.
FIG. 3B is a schematic diagram of the operation of the full-bridge power converter during the first period according to an embodiment of the disclosure.
FIG. 3C is a schematic diagram of the operation of the full-bridge power converter during the second period according to an embodiment of the disclosure.
FIG. 3D is a schematic diagram of the operation of the full-bridge power converter during a third period according to an embodiment of the disclosure.
FIG. 3E is a schematic diagram of the operation of the full-bridge power converter during a fourth period according to an embodiment of the disclosure.

### DESCRIPTION OF THE EMBODIMENTS

Some embodiments of the disclosure will be described in detail below with reference to the accompanying drawings. Reference numerals quoted in the following description will be regarded as the same or similar components when the same reference numerals appear in different drawings. The embodiments are merely a part of the disclosure and do not disclose all possible implementations of the disclosure. More precisely, the embodiments are only examples in the claims of the disclosure.

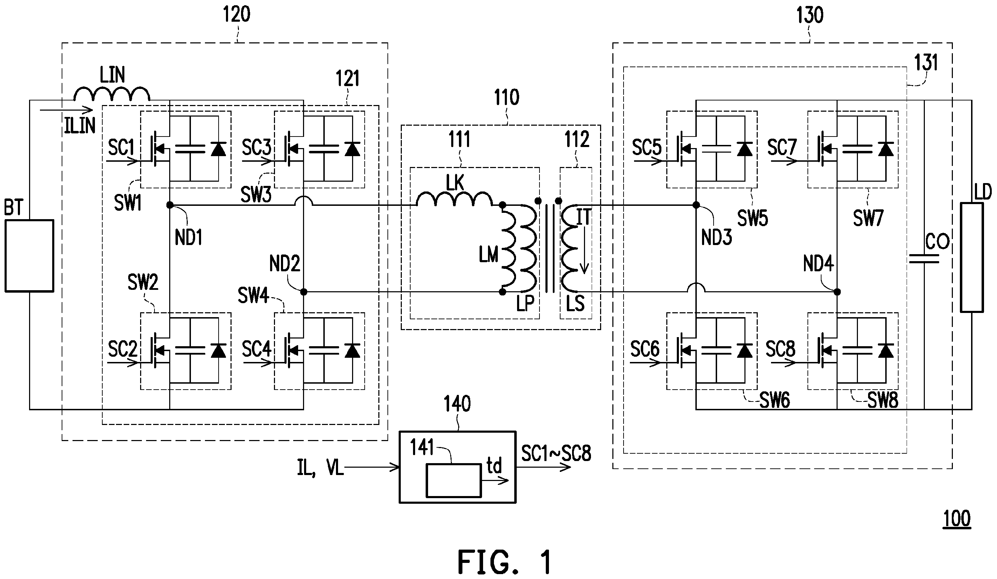

Referring to FIG. 1, FIG. 1 is a schematic diagram of a full-bridge power converter according to an embodiment of the disclosure. In this embodiment, a full-bridge power converter 100 includes a transformer circuit 110, an input-side circuit 120, an output-side circuit 130, and a controller 140. The input-side circuit 120 is coupled to a primary circuit 111 of the transformer circuit 110. The input-side circuit 120 includes an input-side full-bridge circuit 121 and an input inductor LIN. The input-side full-bridge circuit 121 includes power switches SW1 to SW4. The input inductor LIN is coupled between a positive power terminal of a battery module BT and the input-side full-bridge circuit 121. In this embodiment, the battery module BT may be implemented by one of an aluminum-ion battery and a fuel cell, but this embodiment is not limited thereto.

The output-side circuit 130 includes an output-side full-bridge circuit 131 and an output capacitor CO. The output-side full-bridge circuit 131 is coupled to a first terminal of a load LD, a second terminal of the load LD, and a secondary circuit 112 of the transformer circuit 110. The output capacitor CO is coupled between the first terminal of the load LD and the second terminal of the load LD.

In this embodiment, the controller 140 is coupled to the input-side circuit 120 and the output-side circuit 130. The controller 140 turns on the power switches SW1 to SW4 during a first period, causing the transformer circuit 110 to release an electric energy stored in the transformer circuit 110. The controller 140 turns on the power switches SW1 to SW4 during a second period after the first period, and controls the output-side full-bridge circuit 131 to precharge the output-side full-bridge circuit 131 by using an energy stored in the output capacitor CO.

It is worth mentioning here that during the first period, the controller 140 turns on the power switches SW1 to SW4 to release the electric energy stored in the transformer circuit 110. In this way, the full-bridge power converter 100 can reduce a voltage stress from the transformer circuit 110. The chance that the power switches SW1 to SW4 are damaged by the voltage stress can be reduced.

In this embodiment, a switching time point td at which the first period is switched to the second period is determined by the load LD. In other words, the controller 140 may determine the switching time point td at which the first period is switched to the second period by using a condition of the load LD.

In this embodiment, the controller 140 includes a lookup table 141. The lookup table 141 records multiple operating current values corresponding to the load LD and multiple time points of the operating current values of the load LD. The controller 140 selects the switching time point td from the time points according to a current operating current value IL of the load LD and a current operating voltage value VL of the load LD. For example, the switching time point td in a light-load status may be different from the switching time point td in a heavy-load status.

In this embodiment, the first terminal of the power switch SW1 is coupled to the input inductor LIN. The second terminal of the power switch SW1 is coupled to a node ND1. A control terminal of the power switch SW1 is coupled to the controller 140. The control terminal of the power switch SW1 receives a control signal SC1 provided by the controller 140 and performs switching operations in response to the control signal SC1. The first terminal of the power switch SW2 is coupled to the node ND1. The second terminal of the power switch SW2 is coupled to a negative power terminal of the battery module BT. The control terminal of the power switch SW2 is coupled to the controller 140. The control terminal of the power switch SW2 receives a control signal SC2 provided by the controller 140 and performs the switching operations in response to the control signal SC2. The first terminal of the power switch SW3 is coupled to the input inductor LIN. The second terminal of the power switch SW3 is coupled to a node ND2. The control terminal of the power switch SW3 is coupled to the controller 140. The control terminal of the power switch SW3 receives a control signal SC3 provided by the controller 140 and performs the switching operations in response to the control signal SC3. The first terminal of the power switch SW4 is coupled to the node ND2. The second terminal of the power switch SW4 is coupled to the negative power terminal of the battery module BT. The control terminal of the power switch SW4 is coupled to the controller 140. The control terminal of the power switch SW4 receives a control signal SC4 provided by the controller 140 and performs the switching operations in response to the control signal SC4.

In this embodiment, the primary circuit 111 of the transformer circuit 110 is coupled between the node ND1 and the node ND2. Furthermore, the primary circuit 111 includes inductors LK, LM, and a primary winding LP. The first terminal of the inductor LK is coupled to the node ND1. The inductor LM is coupled between the second terminal of the inductor LK and the node ND2. The primary winding LP is coupled between the second end of the inductor LK and the node ND2.

In this embodiment, the inductor LK may be a leakage inductor. The inductors LK and LM may be magnetizing inductors. The inductors LK, LM may be physical inductor elements or parasitic inductances in the primary circuit 111.

In this embodiment, the output-side full-bridge circuit 131 includes power switches SW5 to SW8. The first terminal of the power switch SW5 is coupled to the first terminal of the load LD. The second terminal of the power switch SW5 is coupled to a node ND3. The control terminal of the power switch SW5 is coupled to the controller 140. The control terminal of the power switch SW5 receives a control signal SC5 provided by the controller 140 and performs the switching operations in response to the control signal SC5. The first terminal of the power switch SW6 is coupled to the node ND3. The second terminal of the power switch SW6 is coupled to the second terminal of the load LD. The control terminal of the power switch SW6 is coupled to the controller 140. The control terminal of the power switch SW6 receives a control signal SC6 provided by the controller 140 and performs the switching operations in response to the control signal SC6. The first terminal of the power switch SW7 is coupled to the first terminal of the load LD. The second terminal of the power switch SW7 is coupled to a node ND4. The control terminal of the power switch SW7 is coupled to the controller 140. The control terminal of the power switch SW7 receives a control signal SC7 provided by the controller 140 and performs the switching operations in response to the control signal SC7. The first terminal of the power switch SW8 is coupled to the node ND4. The second terminal of the power switch SW8 is coupled to the second terminal of the load LD. The control terminal of the power switch SW8 is coupled to the controller 140. The control terminal of the power switch SW8 receives a control signal SC8 provided by the controller 140 and performs the switching operations in response to the control signal SC8.

In this embodiment, the secondary circuit 112 of the transformer circuit 110 is coupled between the node ND3 and the node ND4. Furthermore, the secondary circuit 112 includes a secondary winding LS. The secondary winding LS is coupled between the node ND3 and the node ND4.

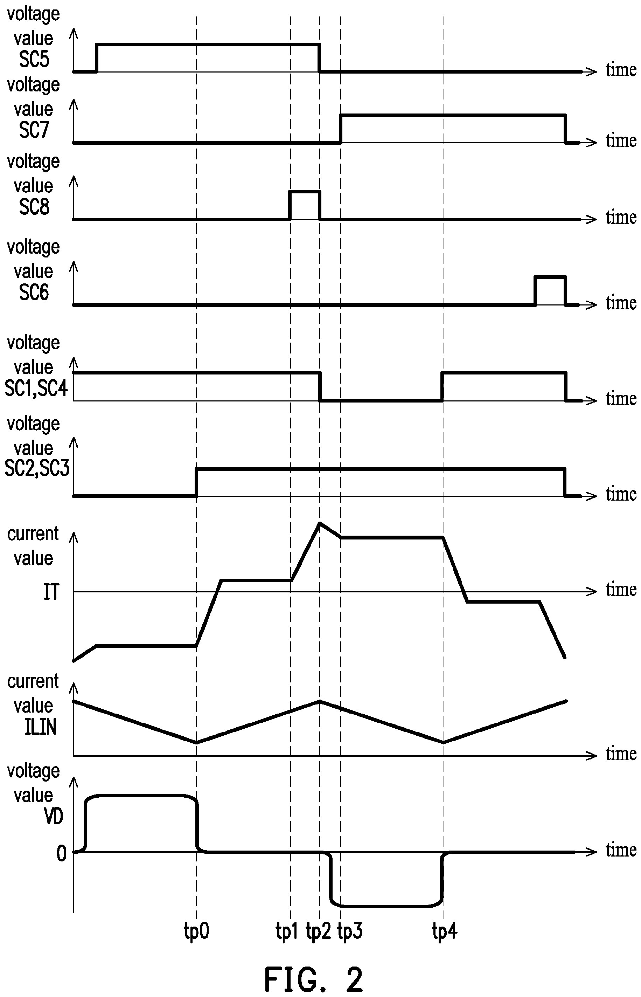

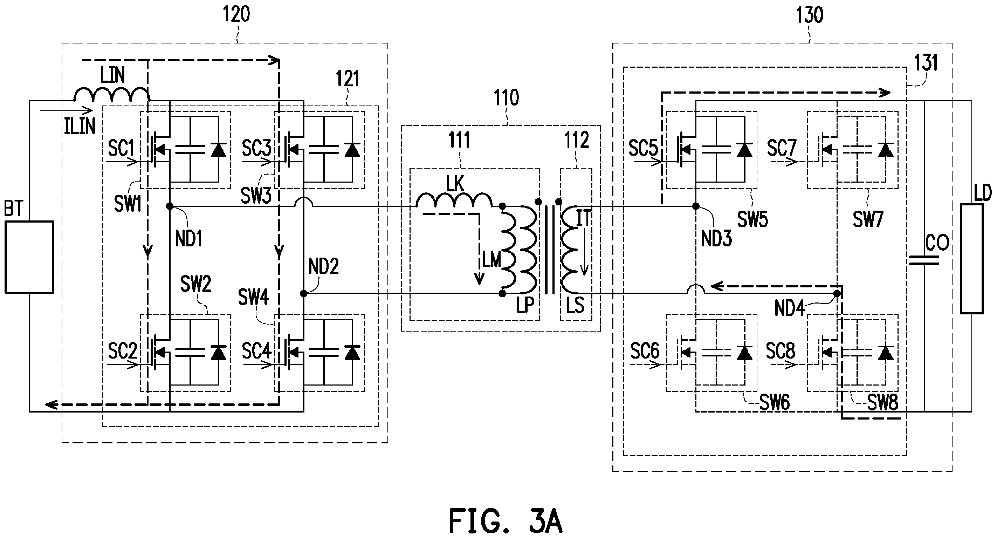

The operation of the full-bridge power converter 100 during different periods is described in detail below. Referring to FIG. 1, FIG. 2, and FIG. 3A at the same time, FIG. 2 is a signal timing diagram according to an embodiment of the disclosure. FIG. 3A is a schematic diagram of the operation of the full-bridge power converter during the first period according to an embodiment of the disclosure. In this embodiment, during the first period between a time point tp0 and a time point tp1, the controller 140 turns on the power switches SW1 to SW5 and turns off the power switches SW6 to SW8 during the first period.

During the first period, the power switches SW1 to SW4 are turned on. The battery module BT and the input inductor LIN are connected in parallel with each other. The battery module BT charges the input inductor LIN by using an input electric energy. Therefore, a current value of an inductor current ILIN flowing through the input inductor LIN gradually increases.

The power switches SW1 to SW4 are turned on during the first period. Therefore, a voltage difference VD between the node ND1 and the node ND2 is equal to 0 volts. The input-side circuit 120 does not provide an electric energy to the transformer circuit 110. The power switch SW5 is turned on. The power switches SW6 to SW8 are turned off. An intrinsic diode in the power switch SW8 is turned on. The transformer circuit 110 releases an electric energy (or a leakage inductance energy) stored in the inductor LK. Therefore, a current value of a transformer current IT flowing through the primary winding LP or the secondary winding LS decreases. The current IT is proportional to the current flowing through the primary winding LP and the current flowing through the secondary winding LS.

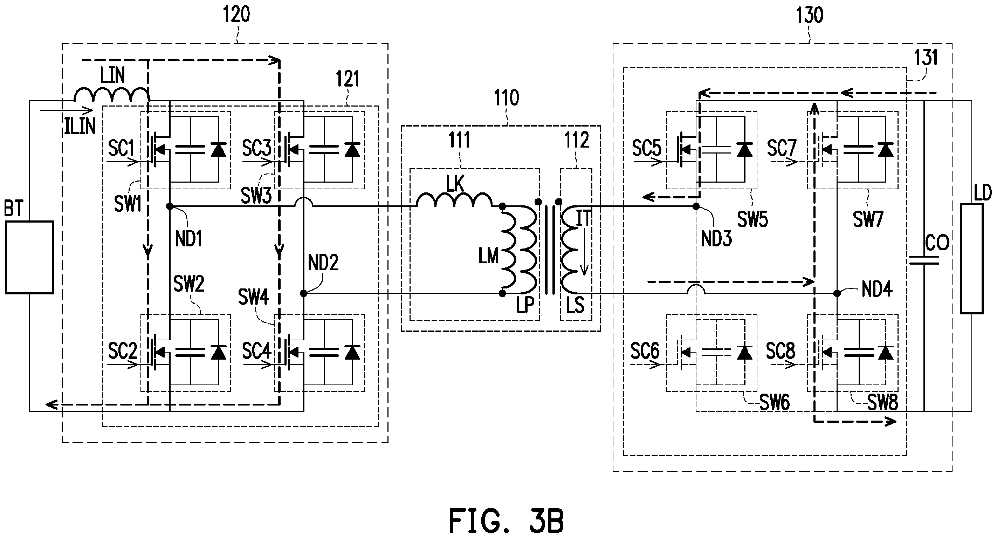

Referring to FIG. 2 and FIG. 3B at the same time, FIG. 3B is a schematic diagram of the operation of the full-bridge power converter during the first period according to an embodiment of the disclosure. After releasing the electric energy (i.e., the leakage inductance energy) stored in the transformer circuit 110, the output-side full-bridge circuit 131 releases the electric energy stored in a parasitic capacitance of the power switch SW7 by using the electric energy stored in the output capacitor CO. In addition, the output-side full-bridge circuit 131 also charges the parasitic capacitance of the power switch SW8 by using the electric energy stored in the output capacitor CO. The current value of the transformer current IT flowing through the primary winding LP or the secondary winding LS increases.

When the electric energy stored in the parasitic capacitance of the power switch SW7 is completely released, the first period ends. The time point tp1 is the switching time point td.

It should be noted here that both the primary winding LP and the secondary winding LS obtain the electric energy during the second period. In other words, during the first period, the transformer circuit 110 does not generate a power loss (e.g., a circulating current loss). In addition, during the first period, the transformer circuit 110 does not generate the voltage stress that may damage the power switches SW1 to SW4. Therefore, the later the time point tp1 is, the smaller the power loss of the full-bridge power converter 100 is.

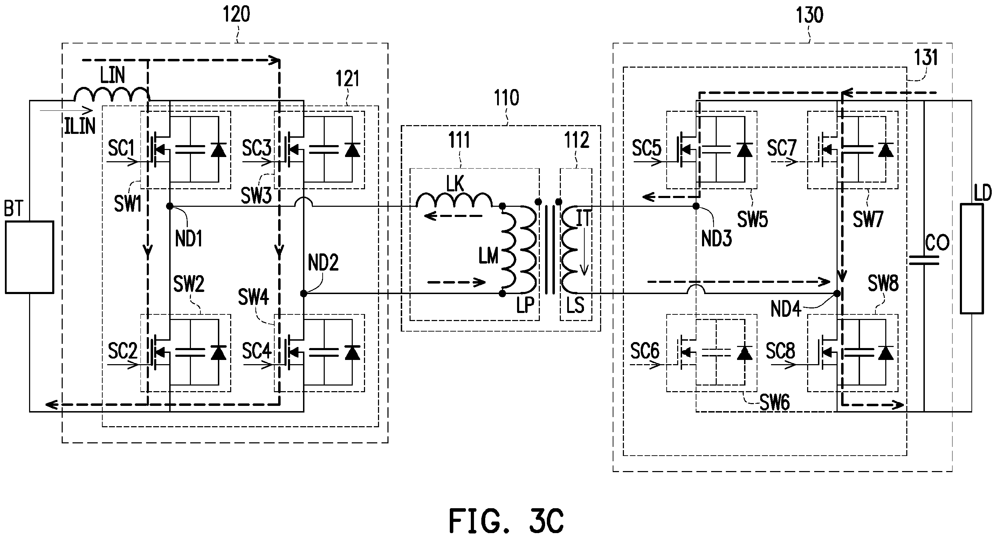

Referring to FIG. 2 and FIG. 3C at the same time, FIG. 3C is a schematic diagram of the operation of the full-bridge power converter during the second period according to an embodiment of the disclosure. In this embodiment, during the second period between the time point tp1 and a time point tp2, the controller 140 turns on the power switches SW1 to SW5 and SW8 and turns off the power switches SW6 and SW7 during the second period.

The power switches SW1 to SW4 are turned on during the second period. Therefore, the voltage difference VD between the node ND1 and the node ND2 is equal to 0 volts. The input-side circuit 120 does not provide the electric energy to the transformer circuit 110. During the second period, the output-side full-bridge circuit 131 charges the parasitic capacitance of the power switch SW7 by using the electric energy stored in the output capacitor CO.

When a terminal voltage value of the parasitic capacitance of the power switch S W7 rises to the voltage value located at the first terminal of the load LD, the controller 140 turns off the power switches SW1, SW4, SW5, and SW8 to end the second period.

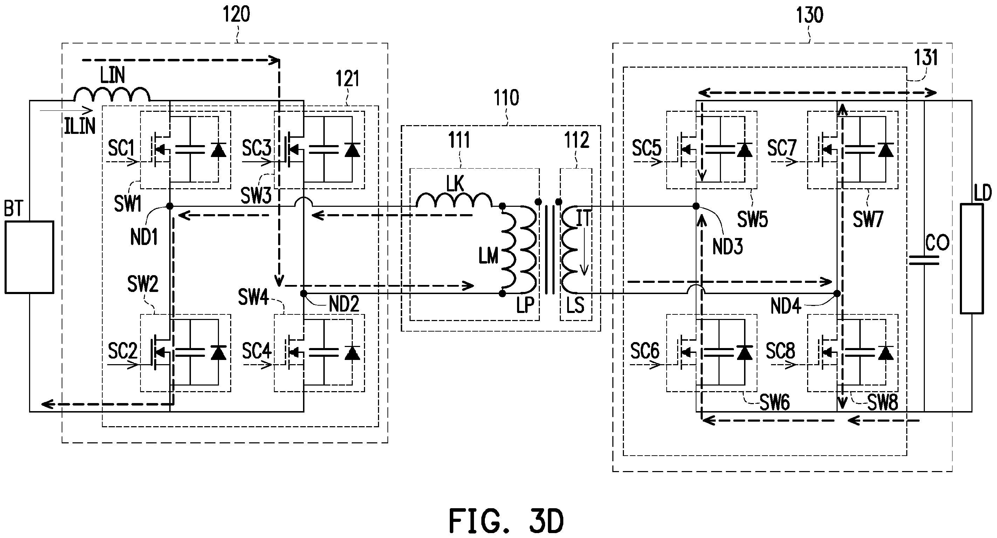

Referring to FIG. 2 and FIG. 3D at the same time, FIG. 3D is a schematic diagram of the operation of the full-bridge power converter during a third period according to an embodiment of the disclosure. In this embodiment, during the third period between time point tp2 and a time point tp3, the controller 140 turns on the power switches SW2 and SW3 and turns off the power switches SW1, SW4, and SW5 to SW8 during the second period.

In the third period, the power switches SW2 and SW3 are turned on. Therefore, the voltage difference VD between the node ND1 and the node ND2 is not equal to 0 volts. The input-side full-bridge circuit 121 provides the electric energy stored in the input inductor LIN to the transformer circuit 110. Therefore, the current value of the inductor current ILIN flowing through the input inductor LIN gradually decreases.

During the third period, the output-side full-bridge circuit 131 releases the electric energy stored in the parasitic capacitance of the power switch SW6 and releases the electric energy stored in the parasitic capacitance of the power switch SW7 by using the electric energy stored in the transformer circuit 110. The output-side full-bridge circuit 131 charges the parasitic capacitance of the power switch SW5 and the parasitic capacitance of the power switch SW8.

When the electric energy stored in the parasitic capacitance of the power switch SW6 and the electric energy stored in the parasitic capacitance of the power switch SW7 are completely released, the output-side full-bridge circuit 131 transmits the electric energy from the transformer circuit 110 to the load LD, the parasitic capacitance of the power switch SW5, and the parasitic capacitance of the power switch SW8 through the intrinsic diode of the power switch SW6 and the intrinsic diode of the power switch SW7.

When the terminal voltage value of the parasitic capacitance of the power switch SW5 and the terminal voltage value of the parasitic capacitance of the power switch SW8 rise to a voltage value located at the first terminal of the load LD, the controller 140 turns on the power switch SW7 to end the third period.

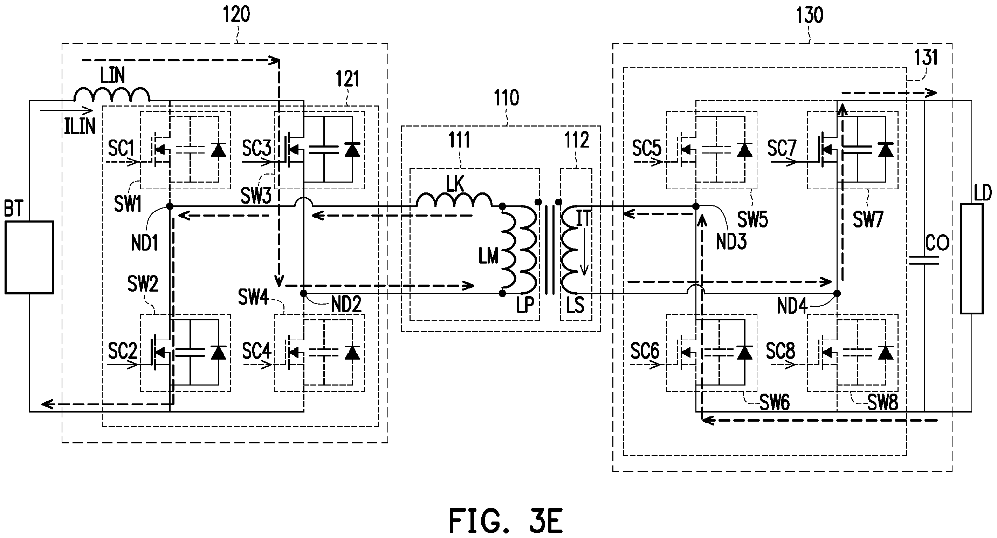

Referring to FIG. 2 and FIG. 3E at the same time, FIG. 3E is a schematic diagram of the operation of the full-bridge power converter during a fourth period according to an embodiment of the disclosure. In this embodiment, during the fourth period between the time point tp2 and the time point tp3, the controller 140 turns on the power switches SW2, SW3, and SW7, and turns off the power switches SW1, SW4 to SW6, and SW8.

In the fourth period, the power switches SW2 and SW3 are turned on. Therefore, the current value of the inductor current ILIN flowing through the input inductor LIN gradually decreases. The electric energy stored in the parasitic capacitance of the power switch SW6 and the electric energy stored in the parasitic capacitance of the power switch SW7 are both completely released during the third period. Therefore, the conduction of the power switch SW7 complies with zero voltage switching (ZVS). The output-side full-bridge circuit 131 transmits the electric energy from the transformer circuit 110 to the load LD through the intrinsic diode of the power switch SW6 and the power switch SW7.

The embodiment illustrates the operation of the first half cycle. The operation of the second half cycle is similar to the operation of the second half cycle, and thus is not repeated herein.

To sum up, during the first period, the controller turns on the power switches of the input-side full-bridge circuit to release the electric energy stored in the transformer circuit. In this way, the full-bridge power converter can reduce the voltage stress from the transformer circuit. T The chance that the power switches of the input-side full-bridge circuit are damaged by the voltage stress can be reduced.

Although the invention has been described with reference to the above embodiments, it will be apparent to one of ordinary skill in the art that modifications to the described embodiments may be made without departing from the spirit of the invention. Accordingly, the scope of the invention is defined by the attached claims not by the above detailed descriptions.

## Claims

1. A full-bridge power converter (100), comprising:
a transformer circuit (110);
an input-side circuit (120), coupled to a primary circuit (111) of the transformer circuit (110), comprising:
an input-side full-bridge circuit (121), comprising a first power switch (SW1), a second power switch (SW2), a third power switch (SW3), and a fourth power switch (SW4); and
an input inductor (LIN), coupled between a positive power terminal of a battery module (BT) and the input-side full-bridge circuit (121);
an output-side circuit (130), comprising:
an output-side full-bridge circuit (131), coupled to a first terminal of a load (LD), a second terminal of the load (LD), and a secondary circuit (112) of the transformer circuit (110); and
an output capacitor (CO), coupled between the first terminal of the load (LD) and the second terminal of the load (LD); and
a controller (140), coupled to the input-side circuit (120) and the output-side circuit (130), configured to:
turn on the first power switch (SW1), the second power switch (SW2), the third power switch (SW3), and the fourth power switch (SW4) during a first period, causing the transformer circuit (110) to release an electric energy stored in the transformer circuit (110), and
turn on the first power switch (SW1), the second power switch (SW2), the third power switch (SW3), and the fourth power switch (SW4) during a second period after the first period, and controlling the output-side full-bridge circuit (131) to precharge the output-side full-bridge circuit (131) by using an energy stored in the output capacitor (CO),
wherein a switching time point (td) at which the first period is switched to the second period is determined by the load (LD).

2. The full-bridge power converter (100) according to claim 1, wherein:
a first terminal of the first power switch (SW1) is coupled to the input inductor (LIN), a second terminal of the first power switch (SW1) is coupled to a first node (ND1), and a control terminal of the first power switch (SW1) is coupled to the controller (140),
a first terminal of the second power switch (SW2) is coupled to the first node (ND1), a second terminal of the second power switch (SW2) is coupled to a negative power terminal of the battery module (BT), and a control terminal of the second power switch (SW2) is coupled to the controller (140),
a first terminal of the third power switch (SW3) is coupled to the input inductor (LIN), a second terminal of the third power switch (SW3) is coupled to a second node (ND2), a control terminal of the third power switch (SW3) is coupled to the controller (140), and
a first terminal of the fourth power switch (SW4) is coupled to the second node (ND2), a second terminal of the fourth power switch (SW4) is coupled to the negative power terminal of the battery module (BT), and a control terminal of the fourth power switch (SW4) is coupled to the controller (140).

3. The full-bridge power converter (100) according to claim 2, wherein the primary circuit (111) is coupled between the first node (ND1) and the second node (ND2).

4. The full-bridge power converter (100) according to claim 2, wherein the output-side full-bridge circuit (131) comprises:
a fifth power switch (SW5), wherein a first terminal of the fifth power switch (SW5) is coupled to the first terminal of the load (LD), a second terminal of the fifth power switch (SW5) is coupled to a third node (ND3), and a control terminal of the fifth power switch (SW5) is coupled to the controller (140);
a sixth power switch (SW6), wherein a first terminal of the sixth power switch (SW6) is coupled to the third node (ND3), a second terminal of the sixth power switch (SW6) is coupled to the second terminal of the load (LD), and a control terminal of the sixth power switch (SW6) is coupled to the controller (140);
a seventh power switch (SW7), wherein a first terminal of the seventh power switch (SW7) is coupled to the first terminal of the load (LD), a second terminal of the seventh power switch (SW7) is coupled to a fourth node (ND4), and a control terminal of the seventh power switch (SW7) is coupled to the controller (140); and
an eighth power switch (SW8), wherein a first terminal of the eighth power switch (SW8) is coupled to the fourth node (ND4), a second terminal of the eighth power switch (SW8) is coupled to the second terminal of the load (LD), and a control terminal of the eighth power switch (SW8) is coupled to the controller (140).

5. The full-bridge power converter (100) according to claim 4, wherein the secondary circuit (112) is coupled between the third node (ND3) and the fourth node (ND4).

6. The full-bridge power converter (100) according to claim 4, wherein during the first period, the controller (140) further turns on the fifth power switch (SW5) and turns off the sixth power switch (SW6), the seventh power switch (SW7), and the eighth power switch (SW8).

7. The full-bridge power converter (100) according to claim 4, wherein during the first period, after an electric energy stored in the transformer circuit (110) is completely released, the output-side full-bridge circuit (131) releases the electric energy stored in a parasitic capacitance of the seventh power switch (SW7) by using the electric energy stored in the output capacitor (CO).

8. The full-bridge power converter (100) according to claim 4, wherein during the second period, the controller (140) further turns on the fifth power switch (SW5) and the eighth power switch (SW8), and turns off the sixth power switch (SW6) and the seventh power switch (SW7).

9. The full-bridge power converter (100) according to claim 4, wherein during the second period:
the output-side full-bridge circuit (131) charges a parasitic capacitance of the seventh power switch (SW7) by using the electric energy stored in the output capacitor (CO), and
in response to a terminal voltage value of the parasitic capacitance of the seventh power switch (SW7) rising to a voltage value located at the first terminal of the load (LD), the controller (140) turns off the first power switch (SW1), the fourth power switch (SW4), the fifth power switch (SW5), and the eighth power switch (SW8) to end the second period.

10. The full-bridge power converter (100) according to claim 4, wherein during a third period after the second period:
the controller (140) turns on the second power switch (SW2) and the third power switch (SW3), and turns off the first power switch (SW1), the fourth power switch (SW4), the fifth power switch (SW5), the sixth power switch (SW6), the seventh power switch (SW7), and the eighth power switch (SW8), and
the input-side full-bridge circuit (121) provides the electric energy stored in the input inductor (LIN) to the transformer circuit (110).

11. The full-bridge power converter (100) according to claim 10, wherein during the third period, the output-side full-bridge circuit (131) releases the electric energy stored in a parasitic capacitance of the sixth power switch (SW6) and releases the electric energy stored in a parasitic capacitance of the seventh power switch (SW7) by using the electric energy stored in the transformer circuit (110), and charges a parasitic capacitance of the fifth power switch (SW5) and a parasitic capacitance of the eighth power switch (SW8).

12. The full-bridge power converter (100) according to claim 11, wherein during the third period, in response to the electric energy stored in the parasitic capacitance of the sixth power switch (SW6) and the electric energy stored in the parasitic capacitance of the seventh power switch (SW7) being completely released, the output-side full-bridge circuit (131) transmits the electric energy from the transformer circuit (110) to the load (LD), the parasitic capacitance of the fifth power switch (SW5), and the parasitic capacitance of the eighth power switch (SW8) through an intrinsic diode of the sixth power switch (SW6) and an intrinsic diode of the seventh power switch (SW7).

13. The full-bridge power converter (100) according to claim 10, wherein during a fourth period after the third period, the controller (140) turns on the second power switch (SW2), the third power switch (SW3), and the seventh power switch (SW7), and turns off the first power switch (SW1), the fourth power switch (SW4), the fifth power switch (SW5), the sixth power switch (SW6), and the eighth power switch (SW8).

14. The full-bridge power converter (100) according to claim 1, wherein the controller (140) comprises:
a lookup table (141), recording a plurality of operating current values corresponding to the load (LD) and a plurality of time points of the plurality of operating current values of the load (LD),
wherein the controller (140) selects the switching time point (td) from the plurality of time points based on a current operating current value (IL) of the load (LD) and a current operating voltage value (VL) of the load (LD).

15. The full-bridge power converter (100) according to claim 1, wherein the battery module (BT) is implemented by one of an aluminum-ion battery and a fuel cell.
